# EUROPÄISCHE PATENTSCHRIFT

(11) **EP 4 427 101 B1**
(45) Veröffentlichungstag und Bekanntmachung des Hinweises auf die Patenterteilung: **27.08.2025**
(21) Anmeldenummer: 22829767.7
(22) Anmeldetag: 05.12.2022
(51) Int. Cl.: G05B 9/03

(54) **VERFAHREN UND SYSTEM ZUR BEREITSTELLUNG VON ZEITKRITISCHEN STEUERUNGSANWENDUNGEN**
METHOD AND SYSTEM FOR PROVIDING TIME-CRITICAL CONTROL APPLICATIONS
PROCÉDÉ ET SYSTÈME DE FOURNITURE D'APPLICATIONS DE COMMANDE À TEMPS CRITIQUE

(30) Priorität: 29.12.2021 EP 21218157
(43) Veröffentlichungstag der Anmeldung: 11.09.2024
(73) Patentinhaber: Siemens Aktiengesellschaft, 80333 München (DE)
(72) Erfinder: GÖTZ, Franz-Josef, 91180 Heideck (DE); SCHIEKOFER, Rainer, 90475 Nürnberg (DE)
(74) Vertreter: Siemens Patent Attorneys
(86) Internationale Anmeldenummer: PCT/EP2022/084397
(87) Internationale Veröffentlichungsnummer: WO 2023/126127

(56) Entgegenhaltungen:
- WO-A1-2017/064560
- US-A1- 2015 081 043

## Beschreibung

Die vorliegende Erfindung betrifft ein Verfahren zur Bereitstellung von zeitkritischer Steuerungsanwendungen, insbesondere Steuerungsanwendungen in einem industriellen Automatisierungssystem, sowie ein System, das zur Durchführung des Verfahrens geeignet ist.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

In WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressourcenreservierung vorgenommen.

Aus EP 3 674 824 A1 ist bekannt, dass für Datenströme, die auf Endgeräten ablaufenden ausgewählten Steuerungsanwendungen zugeordnet sind, jeweils ein individuelles Zeitfenster innerhalb vorgegebener Zeitintervalle spezifiziert wird. Die Zeitfenster weisen jeweils eine individuelle Zyklusdauer auf, die ein Vielfaches einer allgemeinen Zyklusdauer ist oder der allgemeinen Zyklusdauer entspricht. Erste bzw. zweite Kommunikationsgeräte überprüfen für die ausgewählten Steuerungsanwendungen jeweils, ob ein spezifiziertes Zeitfenster zur Datenübermittlung verfügbar ist. Bei einem verfügbaren Zeitfenster wird jeweils eine Information über einen Beginn des Zeitfensters innerhalb der vorgegebenen Zeitintervalle an das Endgerät übermittelt, auf dem die jeweilige ausgewählte Steuerungsanwendung abläuft. Datenströme, die ausgewählten Steuerungsanwendungen zugeordnet sind, werden jeweils entsprechend der Information über den Beginn des individuellen Zeitfensters übermittelt.

In WO 2017/064560 A1 wird ein Verfahren zum Bereitstellen einer zentralisierten Verwaltung eines softwaredefinierten Automatisierungs-Systems (SDA-System) beschrieben. Das SDA-System umfasst eine Erfassung von Controller-Knoten und eine logisch zentralisierte und dennoch physisch verteilte Erfassung von Rechenknoten durch Überwachung von Aktivitäten der Rechenknoten. Dabei können durch Systemkomponenten Ausführungs-, Netzwerk- und Sicherheitsumgebungen innerhalb des SDA-Systems überwacht werden, um kritische Ereignisse in einer vorgegebenen Umgebung zu erkennen. Als Reaktion auf ein erkanntes kritisches Ereignis wird mindestens eine Komponente in der vorgegebenen Umgebung korrigiert. Eine Korrektur innerhalb der vorgegebenen Umgebung bewirkt, dass eine Korrektur mindestens einer Komponente innerhalb zumindest einer weiteren Umgebung veranlasst wird.

In industriellen Automatisierungssystemen werden Steuerungsanwendungen üblicherweise in Echtzeitsystemen, wie speicherprogrammierbaren Steuerungen, ausgeführt, damit ein deterministischer Ablauf der Steuerungsanwendungen sichergestellt werden kann. Im Rahmen eines Programmzyklus werden zunächst aus einer gesteuerten bzw. geregelten Prozess Mess- bzw. Zustandsgrößen als Eingangssignale abgefragt. Dann erfolgt durch die Steuerungsanwendungen auf Basis der abgefragten Eingangssignale eine Ermittlung von Stellgrößen als Ausgangssignalen. Schließlich werden die Ausgangssignale über idealerweise echtzeitfähige Kommunikationssystem an zu steuernde bzw. zu regelnde Geräte übermittelt.

In virtualisierten Steuerungssystemen oder Betriebssystemen ohne Echtzeit-Erweiterungen haben Steuerungsanwendungen jedoch keinen direkten Zugriff auf Hardware und Ablaufsteuerungsumgebung hat. Somit kann beispielsweise keine sofortige Ausführung von Steuerungsbefehlen erzwungen werden. Insbesondere ist es in virtualisierten Steuerungssystemen oder Betriebssystemen ohne Echtzeit-Erweiterungen möglich, dass eine hoch priorisierte Steuerungsanwendung von einer anderen Anwendung verdrängt bzw. verzögert ausgeführt wird. Dies kann beispielsweise dann vorkommen, wenn in einer virtualisierten Umgebung zwei Steuerungsanwendungen laufen, die gleichzeitig exklusiven Zugriff auf dieselbe Ressource anfordern.

Der vorliegenden Erfindung liegt die Aufgabe zugrunde, ein Verfahren zur Bereitstellung zeitkritischer Steuerungsanwendungen innerhalb von Umgebungen zu schaffen, die per se keine Echtzeitfähigkeit aufweisen bzw. und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 11 angegebenen Merkmalen gelöst. Vorteilhafte Weiterbildungen sind in den abhängigen Ansprüchen angegeben.

Entsprechend dem erfindungsgemäßen Verfahren werden Steuerungsanwendungen mittels Ablaufsteuerungskomponenten bereitgestellt, die jeweils in eine mittels einer Server-Einrichtung gebildete Ablaufsteuerungsumgebung ladbar und dort ausführbar sind. Die Steuerungsanwendungen ermitteln aus periodisch erfassten Mess- bzw. Zustandsgrößen jeweils periodisch Stellgrößen für einen zu steuernden oder zu regelnden Prozess.

Die Ablaufsteuerungskomponenten sind vorzugsweise Software-Container, Java Bytecode oder auf Betriebssystemen ablaufenden Anwendungsprogramme, während die Ablaufsteuerungsumgebung eine Container-Laufzeitumgebung, wie eine Docker Engine, eine Java Virtual Machine oder ein Betriebssystem ohne Echtzeit-Erweiterungen sein kann. Grundsätzlich können für die Ablaufsteuerungskomponenten auch alternative Micro-Virtualisierungskonzepte, wie Snaps, verwendet werden. Dementsprechend kann die Ablaufsteuerungsumgebung auch einen Snap Core umfassen.

Vorzugsweise sind Software-Container jeweils dafür ausgestaltet und eingerichtet, von anderen Software-Containern oder Container-Gruppen isoliert innerhalb der Ablaufsteuerungsumgebung auf einem Host-Betriebssystem abzulaufen, das in der Server-Einrichtung installiert ist. Insbesondere nutzen die Software-Container jeweils gemeinsam mit anderen auf der Server-Einrichtung ablaufenden Software-Containern einen Kernel des Host-Betriebssystems der Server-Einrichtung.

Erfindungsgemäß werden mehrere zueinander redundante Ablaufsteuerungskomponenten parallel zueinander ausgeführt. Darüber hinaus übermitteln die zueinander redundanten Ablaufsteuerungskomponenten die ermittelten Stellgrößen unter Einschluss einer dem jeweiligen Prozesszyklus zugeordneten Sequenznummer an Aktoren bzw. Steuerungseinheiten. Dabei identifizieren die Aktoren bzw. Steuerungseinheiten anhand der Sequenznummern Duplikate der übermittelten Stellgrößen und filtern diese dementsprechend. Zusätzlich kann vorgesehen sein, dass die zueinander redundanten Ablaufsteuerungskomponenten die Stellgrößen für einen jeweiligen Prozesszyklus ermitteln, der auf einen jeweiligen Erfassungszeitpunkt der Mess- bzw. Zustandsgrößen folgt, sobald eine Mehrheit der zueinander redundanten Ablaufsteuerungskomponenten ein fehlerfreies Vorliegen der Mess- bzw. Zustandsgrößen für den jeweiligen Erfassungszeitpunkt signalisiert.

Die vorliegende Erfindung ermöglicht eine Ausführung von zeitkritischen Steuerungsanwendungen in Ablaufsteuerungsumgebungen, die selbst keine Echtzeitfähigkeit aufweisen, und zwar durch obige Koordination zueinander redundanter Ablaufsteuerungskomponente bzw. durch eine koordinierte, redundante Übermittlung der ermittelten Stellgrößen. Dadurch kann übliche IT-Infrastruktur verwendet werden, um Steuerungsaufgabe zu lösen, die üblicherweise Echtzeitfähigkeit erfordern. Eine besonders hohe Verfügbarkeit ergibt sich, wenn die zueinander redundanten Ablaufsteuerungskomponenten die Stellgrößen über disjunkte Pfade an die Aktoren bzw. Steuerungseinheiten übermitteln bzw. wenn bei dem die Stellgrößen jeweils an zueinander redundante Steuerungseinheiten übermittelt werden.

Erfindungsgemäß abonnieren die zueinander redundanten Ablaufsteuerungskomponenten jeweils einheitlich Datenströme mit den periodisch erfassten Mess- bzw. Zustandsgrößen. Auf diese Weise kann sichergestellt werden, dass die zueinander redundanten Ablaufsteuerungskomponenten mit einem konsistenten Prozessabbild arbeiten. Vorzugsweise werden die Datenströme mit den periodisch erfassten Mess- bzw. Zustandsgrößen durch jeweilige Datenquellen bzw. Sensoren jeweils mittels Datenstrom-Ankündigungen bekannt gemacht und an eine Multicast-Adresse gesendet, die den jeweiligen Datenstrom abonnierenden Ablaufsteuerungskomponenten zugeordnet ist.

Darüber hinaus werden die Mess- bzw. Zustandsgrößen erfindungsgemäß unter Einschluss einer dem jeweiligen Erfassungszeitpunkt zugeordneten Sequenznummer an die zueinander redundanten Ablaufsteuerungskomponenten gesendet. Dabei übermitteln die zueinander redundanten Ablaufsteuerungskomponenten die ermittelten Stellgrößen mittels Datenströmen an die Aktoren bzw. Steuerungseinheiten. Zum Senden der Mess- bzw. Zustandsgrößen für den jeweiligen Erfassungszeitpunkt werden dieselben Sequenznummern verwendet wie zur Übermittlung der ermittelten Stellgrößen für den jeweiligen Prozesszyklus, der auf den jeweiligen Erfassungszeitpunkt der Mess- bzw. Zustandsgrößen folgt. Auf diese Weise können stochastische Eigenschaften von verteilten Systemen in Kombination mit Kommunikationssystemfunktionen zur deterministischen und redundanten Übermittlung von Datenströmen effizient genutzt, um einen stochastischen Determinismus für die Steuerungsanwendungen zu ermöglichen.

Für eine Übermittlung der Datenströme werden erfindungsgemäß Dienstgüteanforderungen spezifiziert. Entsprechend diesen Dienstgüteanforderungen werden in die Datenströme weiterleitenden Kommunikationsgeräten, beispielsweise Switches, Bridges oder Router, Ressourcen für die Übermittlung der Datenströme reserviert. Diese Ressourcen werden bei ausreichender Verfügbarkeit in den die Datenströme weiterleitenden Kommunikationsgeräten reserviert und umfassen nutzbare Übertragungszeitfenster, Bandbreite, zugesicherte maximale Latenz, Queue-Anzahl, Queue-Cache bzw. Adress-Cache in Switches oder Bridges.

Entsprechend einer besonders bevorzugten Ausgestaltung der vorliegenden Erfindung sind die Kommunikationsgeräte, welche die Datenströme weiterleiten, über ein Time-sensitive Network, insbesondere entsprechend IEEE802.3, IEEE 802.1Q, IEEE 802.1AB, IEEE 802.1AS, IEEE 802.1BA bzw. IEEE 802.1CB, miteinander verbunden. Dementsprechend kann eine Weiterleitung der Datenströme mittels Frame Preemption, insbesondere gemäß IEEE 802.1Q, Time-Aware Shaper, insbesondere gemäß IEEE 802.1Q, Credit-Based Shaper, insbesondere gemäß IEEE 802.1Q, Burst Limiting Shaper, Peristaltic Shaper bzw. Priority-Based Shaper gesteuert werden. Auf diese Weise kann auf bewährte, zuverlässig zu implementierende Kommunikationssystemfunktionen zur deterministischen und redundanten Übermittlung von Datenströmen zurückgegriffen werden.

Die zueinander redundanten Ablaufsteuerungskomponenten signalisieren das fehlerfreie Vorliegen der Mess- bzw. Zustandsgrößen für den jeweiligen Erfassungszeitpunkt vorteilhafterweise jeweils mittels einer Bestätigungsmeldung an die übrigen redundanten Ablaufsteuerungskomponenten. Darüber hinaus wird bei einem verspäteten bzw. fehlerbehafteten Vorliegen der Mess- bzw. Zustandsgrößen in der Mehrheit der zueinander redundanten Ablaufsteuerungskomponenten ein Fehler signalisiert, bzw. es erfolgt eine erneute Übermittlung der zuletzt ermittelten Stellgrößen. Damit ist auch in Fehlerfällen ein definiertes Systemverhalten sichergestellt. Verspätet liegen die Mess- bzw. Zustandsgrößen beispielsweise vor, wenn sie nicht innerhalb einer zulässigen Latenz ab dem jeweiligen Erfassungszeitpunkt durch die Ablaufsteuerungskomponenten empfangen werden.

Das erfindungsgemäße System zur Bereitstellung von zeitkritischen Steuerungsanwendungen ist zur Durchführung eines Verfahrens entsprechend vorangehenden Ausführungen geeignet und umfasst mehrere Server-Einrichtungen, mehrere mittels der Server-Einrichtungen gebildete Ablaufsteuerungsumgebungen sowie mehrere Ablaufsteuerungskomponenten zur Bereitstellung der Steuerungsanwendungen. Die Ablaufsteuerungskomponenten sind jeweils in eine mittels einer Server-Einrichtung gebildete Ablaufsteuerungsumgebung ladbar und dort ausführbar. Dabei sind die Steuerungsanwendungen dafür eingerichtet und ausgestaltet, aus periodisch erfassten Mess- bzw. Zustandsgrößen jeweils periodisch Stellgrößen für einen zu steuernden oder zu regelnden Prozess zu ermitteln.

Die Ablaufsteuerungskomponenten des erfindungsgemäßen Systems sind dafür eingerichtet und ausgestaltet, als zueinander redundante Ablaufsteuerungskomponenten parallel zueinander ausgeführt zu werden, jeweils einheitlich Datenströme mit den periodisch erfassten Mess- bzw. Zustandsgrößen zu abonnieren und die ermittelten Stellgrößen mittels Datenströmen an Aktoren bzw. Steuerungseinheiten übermitteln. Dementsprechend ist erfindungsgemäße System dafür eingerichtet und ausgestaltet, dass für eine Übermittlung der Datenströme Dienstgüteanforderungen spezifiziert werden und die Mess- bzw. Zustandsgrößen unter Einschluss einer einem jeweiligen Erfassungszeitpunkt zugeordneten Sequenznummer an die zueinander redundanten Ablaufsteuerungskomponenten gesendet werden.

Darüber hinaus sind die Ablaufsteuerungskomponenten dafür eingerichtet und ausgestaltet, die ermittelten Stellgrößen unter Einschluss einer dem jeweiligen Prozesszyklus zugeordneten Sequenznummer an die Aktoren bzw. Steuerungseinheiten zu übermitteln. Dementsprechend sind die Aktoren bzw. Steuerungseinheiten dafür eingerichtet und ausgestaltet, anhand der Sequenznummern Duplikate der übermittelten Stellgrößen zu identifizieren und zu filtern. Des Weiteren ist das erfindungsgemäße System dafür eingerichtet und ausgestaltet, dass zum Senden der Mess- bzw. Zustandsgrößen für den jeweiligen Erfassungszeitpunkt dieselben Sequenznummern verwendet werden wie zur Übermittlung der ermittelten Stellgrößen für den jeweiligen Prozesszyklus, der auf den jeweiligen Erfassungszeitpunkt der Mess- bzw. Zustandsgrößen folgt. Außerdem ist das System dafür eingerichtet und ausgestaltet, dass in die Datenströme weiterleitenden Kommunikationsgeräten entsprechend den Dienstgüteanforderungen bei ausreichender Verfügbarkeit Ressourcen für die Übermittlung der Datenströme reserviert werden. Dabei umfassen die Ressourcen nutzbare Übertragungszeitfenster, Bandbreite, zugesicherte maximale Latenz, Queue-Anzahl, Queue-Cache bzw. Adress-Cache in Switches oder Bridges.

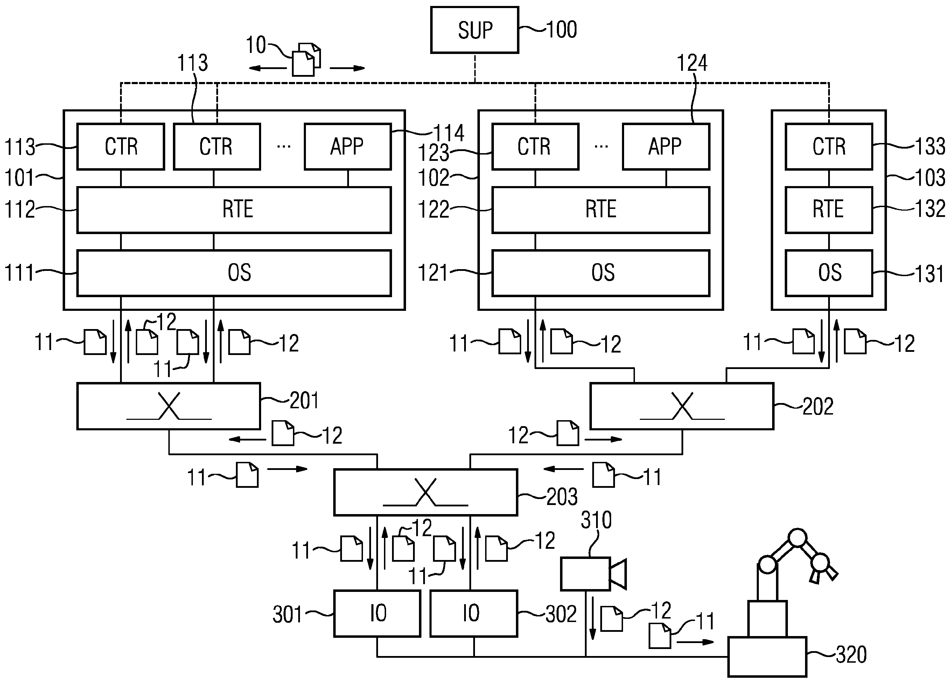

Die vorliegende Erfindung wird nachfolgend an einem Ausführungsbeispiel anhand der Zeichnung näher erläutert. Es zeigt die
- Figur: ein System zur Bereitstellung von zeitkritischen Steuerungsanwendungen.

Das in der Figur dargestellte System umfasst mehrere Server-Einrichtung 101-103 zur Bereitstellung von Steuerungsanwendungen eines industriellen Automatisierungssystems. Die Steuerungsanwendungen des industriellen Automatisierungssystems sind exemplarisch für zeitkritische Dienste und können auch Überwachungsfunktionen umfassen. Die Server-Einrichtungen 101-103 sind im vorliegenden Ausführungsbeispiel über ein mehrere Switche 201-203 umfassendes Kommunikationsnetz mit zwei zueinander redundanten Eingabe/Ausgabe-Einheiten 301-302 verbunden, die als Steuerungseinheiten für angeschlossene Sensoren und Aktoren dienen. Beispielsweise können an die Eingabe/Ausgabe-Einheiten 301-302 ein Kamerasystem 310 als Sensor und eine durch o.g. Steuerungsanwendungen gesteuerte Maschine als Aktor angeschlossen sein.

Die Switche 201-203 sind insbesondere zur Weiterleitung von Datenströmen über ein Time-sensitive Network entsprechend IEEE802.3, IEEE 802.1Q, IEEE 802.1AB, IEEE 802.1AS, IEEE 802.1BA und IEEE 802.1CB ausgestaltet. Dabei kann die Weiterleitung der Datenströme beispielsweise mittels Frame Preemption gemäß IEEE 802.1Q, Time-Aware Shaper gemäß IEEE 802.1Q, Credit-Based Shaper gemäß IEEE 802.1Q, Burst Limiting Shaper, Peristaltic Shaper bzw. Priority-Based Shaper gesteuert werden.

Die Server-Einrichtungen 101-103 können mittels der Steuerungsanwendungen beispielsweise Funktionen von Steuerungsgeräten eines industriellen Automatisierungssystems, wie speicherprogrammierbaren Steuerungen, implementieren. Auf diese Weise können die Server-Einrichtung 101-103 insbesondere für einen Austausch von Steuerungs- und Messgrößen mit durch die Server-Einrichtungen 101-103 gesteuerten Maschinen oder Vorrichtungen genutzt werden. Dabei können die Server-Einrichtungen 101-103 aus erfassten Mess- oder beobachteten Zustandsgrößen geeignete Stellgrößen für die Maschinen oder Vorrichtungen ermitteln.

Alternativ oder zusätzlich können die Server-Einrichtung 101-103 mittels der Steuerungsanwendungen Funktionen von Bedien- und Beobachtungsstationen implementieren und somit zur Visualisierung von Prozessdaten bzw. Mess- und Steuerungsgrößen genutzt werden, die durch Automatisierungsgeräte verarbeitet bzw. erfasst werden. Insbesondere können die Server-Einrichtungen 101-103 zur Anzeige von Werten eines Regelungskreises und zur Veränderung von Regelungsparametern oder -programmen verwendet werden.

In der Server-Einrichtungen 101-103 werden die Steuerungsanwendungen werden jeweils mittels Ablaufsteuerungskomponenten 113, 123, 133 bereitgestellt, die in eine mittels der jeweiligen Server-Einrichtung 101-103 gebildete Ablaufsteuerungsumgebung 112, 122, 132 ladbar und dort ausführbar sind. Die Ablaufsteuerungsumgebungen 112, 122, 132 sind jeweils als Anwendung auf einem Host-Betriebssystem 111, 121, 131 der jeweiligen Server-Einrichtung 101-103 installiert. Darüber hinaus können innerhalb der Ablaufsteuerungsumgebungen auch Ablaufsteuerungskomponenten 114, 124 für zeitunkritische Anwendungsprogramme ausgeführt werden.

Im vorliegenden Ausführungsbeispiel sind bzw. umfassen die Ablaufsteuerungskomponenten 113-114, 123-124, 133 Software-Container, die jeweils von anderen Software-Containern, Container-Gruppen bzw. Pods isoliert innerhalb der Ablaufsteuerungsumgebungen 112, 122, 132 auf dem jeweiligen Host-Betriebssystem 111, 121, 131 ablaufen. Dabei nutzen die Software-Container jeweils gemeinsam mit anderen auf der jeweiligen Server-Einrichtung 101-103 ablaufenden Software-Containern einen Kernel des jeweiligen Host-Betriebssystems 111, 121, 131. Die Ablaufsteuerungsumgebungen 112, 122, 132 sind vorzugsweise Container-Laufzeitumgebungen bzw. Container-Engines. Entsprechend alternativen Ausführungsformen können die Ablaufsteuerungskomponenten 113-114, 123-124, 133 Java Bytecode oder auf Betriebssystemen ablaufenden Anwendungsprogramme umfassen, während die Ablaufsteuerungsumgebungen 112, 122, 132 in diesem Fall jeweils eine Java Virtual Machine oder ein Betriebssystem ohne Echtzeit-Erweiterungen sind.

Eine Isolation der Ablaufsteuerungskomponenten bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden.

Die Steuerungsanwendungen ermitteln aus periodisch erfassten Mess- bzw. Zustandsgrößen 12 jeweils periodisch Stellgrößen 11 für einen zu steuernden oder zu regelnden Prozess. Hierzu werden mehrere zueinander redundante Ablaufsteuerungskomponenten 113, 123, 133 parallel zueinander ausgeführt. Die zueinander redundanten Ablaufsteuerungskomponenten 113, 123, 133 abonnieren im vorliegenden Ausführungsbeispiel jeweils einheitlich Datenströme mit den periodisch erfassten Mess- bzw. Zustandsgrößen 12, die insbesondere vom Kamerasystem 310 stammen können. Die Datenströme mit den periodisch erfassten Mess- bzw. Zustandsgrößen werden durch jeweilige Datenquellen bzw. Sensoren 310 jeweils mittels Datenstrom-Ankündigungen, z.B. Talker Advertise, bekannt gemacht und an eine Multicast-Adresse gesendet, die den jeweiligen Datenstrom abonnierenden Ablaufsteuerungskomponenten 113, 123, 133 zugeordnet ist.

Für eine Übermittlung der Datenströme können insbesondere Talker- bzw. Listener-seitig Dienstgüteanforderungen spezifiziert werden, so dass in die Datenströme weiterleitenden Kommunikationsgeräten, wie den Switches 201-203, entsprechend den Dienstgüteanforderungen Ressourcen für die Übermittlung der Datenströme reserviert werden. Dies setzt voraus, dass in den die Datenströme weiterleitenden Kommunikationsgeräten ausreichende Ressourcen verfügbar sind. Dabei umfassen die Ressourcen beispielsweise nutzbare Übertragungszeitfenster, Bandbreite, zugesicherte maximale Latenz, Queue-Anzahl, Queue-Cache bzw. Adress-Cache in Switches oder Bridges umfassen.

Die zueinander redundanten Ablaufsteuerungskomponenten 113, 123, 133 ermitteln die Stellgrößen 11 für einen jeweiligen Prozesszyklus, der auf einen jeweiligen Erfassungszeitpunkt der Mess- bzw. Zustandsgrößen 12 folgt, sobald eine Mehrheit der zueinander redundanten Ablaufsteuerungskomponenten ein fehlerfreies Vorliegen der Mess- bzw. Zustandsgrößen 12 für den jeweiligen Erfassungszeitpunkt signalisiert. Im vorliegenden Ausführungsbeispiel signalisieren die zueinander redundanten Ablaufsteuerungskomponenten 113, 123, 133 das fehlerfreie Vorliegen der Mess- bzw. Zustandsgrößen 12 für den jeweiligen Erfassungszeitpunkt jeweils mittels einer Bestätigungsmeldung 10 an die übrigen redundanten Ablaufsteuerungskomponenten.

Bei einem verspäteten oder fehlerbehafteten Vorliegen der Mess- bzw. Zustandsgrößen 12 in der Mehrheit der zueinander redundanten Ablaufsteuerungskomponenten 113, 123, 133 kann ein Fehler signalisiert werden bzw. eine erneute Übermittlung der zuletzt ermittelten Stellgrößen 11 erfolgen. Verspätet liegen die Mess- bzw. Zustandsgrößen vor, wenn sie nicht innerhalb einer zulässigen Latenz ab dem jeweiligen Erfassungszeitpunkt durch die Ablaufsteuerungskomponenten empfangen werden.

Alternativ oder zusätzlich übermitteln die zueinander redundanten Ablaufsteuerungskomponenten 113, 123, 133 die ermittelten Stellgrößen 11 unter Einschluss einer dem jeweiligen Prozesszyklus zugeordneten Sequenznummer an Aktoren 320 bzw. Steuerungseinheiten 31-32. Dies kann insbesondere unabhängig davon erfolgen, ob bzw. wann die Mess- bzw. Zustandsgrößen 12 für den jeweiligen Erfassungszeitpunkt in der Mehrheit der zueinander redundanten Ablaufsteuerungskomponenten 113, 123, 133 fehlerfrei vorliegen. Anhand der Sequenznummern können die Aktoren 320 bzw. Steuerungseinheiten 31-32 Duplikate der übermittelten Stellgrößen 11 identifizieren und filtern. Eine solche Duplikatefilterung kann auch durch die Switches 201-203 nach einer Weiterleitung der Stellgrößen 11 über abschnittsweise disjunkte Pfade erfolgen.

Vorzugsweise werden die Mess- bzw. Zustandsgrößen 12 unter Einschluss einer dem jeweiligen Erfassungszeitpunkt zugeordneten Sequenznummer mittels der abonnierten Datenströme an die zueinander redundanten Ablaufsteuerungskomponenten 113, 123, 133 gesendet. Korrespondierend dazu übermitteln die zueinander redundanten Ablaufsteuerungskomponenten 113, 123, 133 die ermittelten Stellgrößen 11 mittels Datenströmen an die Aktoren 320 bzw. Steuerungseinheiten 31-32. Dabei werden zum Senden der Mess- bzw. Zustandsgrößen 12 für den jeweiligen Erfassungszeitpunkt dieselben Sequenznummern verwendet werden wie zur Übermittlung der ermittelten Stellgrößen 11 für den jeweiligen Prozesszyklus, der auf den jeweiligen Erfassungszeitpunkt der Mess- bzw. Zustandsgrößen 12 folgt.

Zur Duplikatefilterung kann auf Basis einer maximalen Varianz von Frame- bzw. Paket-Laufzeiten bei einer Übermittlung der Stellgrößen 11 eine Größe bzw. Tiefe eines Duplikatefilters festgelegt werden. Zusätzlich kann eine minimale Intervall-Länge berücksichtigt werden, mit der die Mess- bzw. Zustandsgrößen 12 periodisch durch die jeweilige Datenquellen bzw. Sensoren 310 gesendet werden. Eine Varianz aus minimalen und maximalen Laufzeiten über Duplikate von Stellgrößen 11, die von zueinander redundanten Ablaufsteuerungskomponenten 113, 123, 133 werden, lässt sich an Verknüpfungspunkten, beispielsweise an den Switches 201-203, relativ problemlos bestimmen. Insbesondere können in deterministischen Kommunikationsnetzen an den Verknüpfungspunkten Merging Points Funktionen zur Jitter-Minimierung genutzt werden. Durch gezielte Verzögerungen bei der Übermittlung der Stellgrößen 11 oder der Mess- bzw. Zustandsgrößen 12 kann ein reduzierter Jitter erzielt werden.

Entsprechend einer besonders bevorzugten Ausführungsvariante ist zur Nutzung von redundanter Datenübermittlung, asynchroner Kommunikation, Diagnose von verteilten Systemen und zur Koordination der zueinander redundanten Ablaufsteuerungskomponenten 113, 123, 133 ein Supervisor 100 vorgesehen. Mittels des Supervisors können beispielsweise redundante Ablaufsteuerungskomponenten hinzugefügt oder entfernt werden. Ein Entfernen von Ablaufsteuerungskomponenten aus einem Cluster redundanter Ablaufsteuerungskomponenten bietet sich insbesondere dann an, wenn eine Ablaufsteuerungskomponente benötigte Mess- bzw. Zustandsgrößen verspätet empfängt bzw. verarbeitet. Auf diese Weise können Latenzen und Jitter reduziert werden.

## Patentansprüche

1. Verfahren zur Bereitstellung von zeitkritischen Steuerungsanwendungen, bei dem
- die Steuerungsanwendungen mittels Ablaufsteuerungskomponenten (113, 123, 133) bereitgestellt werden, die jeweils in eine mittels einer Server-Einrichtung (101-103) gebildete Ablaufsteuerungsumgebung (112, 122, 132) ladbar und dort ausführbar sind,
- die Steuerungsanwendungen aus periodisch erfassten Mess- und/oder Zustandsgrößen (12) jeweils periodisch Stellgrößen (11) für einen zu steuernden oder zu regelnden Prozess ermitteln,
- mehrere zueinander redundante Ablaufsteuerungskomponenten (113, 123, 133) parallel zueinander ausgeführt werden, jeweils einheitlich Datenströme mit den periodisch erfassten Mess- und/oder Zustandsgrößen (12) abonnieren und die ermittelten Stellgrößen mittels Datenströmen an Aktoren und/oder Steuerungseinheiten übermitteln,
- für eine Übermittlung der Datenströme Dienstgüteanforderungen spezifiziert werden,
- die Mess- und/oder Zustandsgrößen unter Einschluss einer einem jeweiligen Erfassungszeitpunkt zugeordneten Sequenznummer an die zueinander redundanten Ablaufsteuerungskomponenten gesendet werden,
- die zueinander redundanten Ablaufsteuerungskomponenten (113, 123, 133) die ermittelten Stellgrößen (11) unter Einschluss einer dem jeweiligen Prozesszyklus zugeordneten Sequenznummer an die Aktoren (320) und/oder Steuerungseinheiten (31-32) übermitteln,
- die Aktoren (320) und/oder Steuerungseinheiten (31-32) anhand der Sequenznummern Duplikate der übermittelten Stellgrößen (11) identifizieren und filtern,
- zum Senden der Mess- und/oder Zustandsgrößen für den jeweiligen Erfassungszeitpunkt dieselben Sequenznummern verwendet werden wie zur Übermittlung der ermittelten Stellgrößen für den jeweiligen Prozesszyklus, der auf den jeweiligen Erfassungszeitpunkt der Mess- und/oder Zustandsgrößen folgt,
- in die Datenströme weiterleitenden Kommunikationsgeräten entsprechend den Dienstgüteanforderungen bei ausreichender Verfügbarkeit Ressourcen für die Übermittlung der Datenströme reserviert werden, wobei die Ressourcen nutzbare Übertragungszeitfenster, Bandbreite, zugesicherte maximale Latenz, Queue-Anzahl, Queue-Cache und/oder Adress-Cache in Switches oder Bridges umfassen.

2. Verfahren nach Anspruch 1,
bei dem die Datenströme mit den periodisch erfassten Mess- und/oder Zustandsgrößen (12) durch jeweilige Datenquellen und/oder Sensoren (310) jeweils mittels Datenstrom-Ankündigungen bekannt gemacht und an eine Multicast-Adresse gesendet werden, die den jeweiligen Datenstrom abonnierenden Ablaufsteuerungskomponenten zugeordnet ist.

3. Verfahren nach einem der Ansprüche 1 oder 2,
bei dem die die Datenströme weiterleitenden Kommunikationsgeräte (201-202) über ein Time-sensitive Network, insbesondere entsprechend IEEE802.3, IEEE 802.1Q, IEEE 802.1AB, IEEE 802.1AS, IEEE 802.1BA und/oder IEEE 802.1CB, miteinander verbunden sind.

4. Verfahren nach Anspruch 3,
bei dem eine Weiterleitung der Datenströme mittels Frame Preemption, insbesondere gemäß IEEE 802.1Q, Time-Aware Shaper, insbesondere gemäß IEEE 802.1Q, Credit-Based Shaper, insbesondere gemäß IEEE 802.1Q, Burst Limiting Shaper, Peristaltic Shaper und/oder Priority-Based Shaper gesteuert wird.

5. Verfahren nach einem der Ansprüche 1 bis 4,
bei dem die Ablaufsteuerungskomponenten Software-Container, Java Bytecode oder auf Betriebssystemen ablaufenden Anwendungsprogramme sind und bei dem die Ablaufsteuerungsumgebung eine Container-Laufzeitumgebung, eine Java Virtual Machine oder ein Betriebssystem ohne Echtzeit-Erweiterungen ist.

6. Verfahren nach einem der Ansprüche 1 bis 5,
bei dem die zueinander redundanten Ablaufsteuerungskomponenten die Stellgrößen über disjunkte Pfade an die Aktoren und/oder Steuerungseinheiten übermitteln.

7. Verfahren nach einem der Ansprüche 1 bis 6,
bei dem die Stellgrößen jeweils an zueinander redundante Steuerungseinheiten übermittelt werden.

8. Verfahren nach einem der Ansprüche 1 bis 7,
bei dem die zueinander redundanten Ablaufsteuerungskomponenten (113, 123, 133) das fehlerfreie Vorliegen der Mess- und/oder Zustandsgrößen für den jeweiligen Erfassungszeitpunkt jeweils mittels einer Bestätigungsmeldung (10) an die übrigen redundanten Ablaufsteuerungskomponenten signalisieren.

9. Verfahren nach einem der Ansprüche 1 bis 8,
bei dem bei einem verspäteten und/oder fehlerbehafteten Vorliegen der Mess- und/oder Zustandsgrößen in der Mehrheit der zueinander redundanten Ablaufsteuerungskomponenten ein Fehler signalisiert wird und/oder eine erneute Übermittlung der zuletzt ermittelten Stellgrößen erfolgt.

10. Verfahren nach Anspruch 9,
bei dem die Mess- und/oder Zustandsgrößen verspätet vorliegen, wenn sie nicht innerhalb einer zulässigen Latenz ab dem jeweiligen Erfassungszeitpunkt durch die Ablaufsteuerungskomponenten empfangen werden.

11. System zur Bereitstellung von zeitkritischen Steuerungsanwendungen mit
- mehreren Server-Einrichtungen (101-103),
- mehreren mittels der Server-Einrichtungen (101-103) gebildeten Ablaufsteuerungsumgebungen (112, 122, 132),
- mehreren Ablaufsteuerungskomponenten (113, 123, 133) zur Bereitstellung der Steuerungsanwendungen, wobei die Ablaufsteuerungskomponenten jeweils in eine mittels einer Server-Einrichtung (101-103) gebildete Ablaufsteuerungsumgebung (112, 122, 132) ladbar und dort ausführbar sind,
- wobei die Steuerungsanwendungen dafür eingerichtet und ausgestaltet sind, aus periodisch erfassten Mess- und/oder Zustandsgrößen (12) jeweils periodisch Stellgrößen (11) für einen zu steuernden oder zu regelnden Prozess zu ermitteln,
- wobei die Ablaufsteuerungskomponenten dafür eingerichtet und ausgestaltet sind, als zueinander redundante Ablaufsteuerungskomponenten parallel zueinander ausgeführt zu werden, jeweils einheitlich Datenströme mit den periodisch erfassten Mess- und/oder Zustandsgrößen (12) zu abonnieren und die ermittelten Stellgrößen mittels Datenströmen an Aktoren und/oder Steuerungseinheiten übermitteln,
- wobei das System dafür eingerichtet und ausgestaltet ist, dass für eine Übermittlung der Datenströme Dienstgüteanforderungen spezifiziert werden und die Mess- und/oder Zustandsgrößen unter Einschluss einer einem jeweiligen Erfassungszeitpunkt zugeordneten Sequenznummer an die zueinander redundanten Ablaufsteuerungskomponenten gesendet werden,
- wobei die Ablaufsteuerungskomponenten dafür eingerichtet und ausgestaltet sind, die ermittelten Stellgrößen unter Einschluss einer dem jeweiligen Prozesszyklus zugeordneten Sequenznummer an die Aktoren und/oder Steuerungseinheiten zu übermitteln,
- wobei die Aktoren (320) und/oder Steuerungseinheiten (31-32) dafür eingerichtet und ausgestaltet sind, anhand der Sequenznummern Duplikate der übermittelten Stellgrößen (11) zu identifizieren und zu filtern,
- wobei das System ferner dafür eingerichtet und ausgestaltet ist, dass zum Senden der Mess- und/oder Zustandsgrößen für den jeweiligen Erfassungszeitpunkt dieselben Sequenznummern verwendet werden wie zur Übermittlung der ermittelten Stellgrößen für den jeweiligen Prozesszyklus, der auf den jeweiligen Erfassungszeitpunkt der Mess- und/oder Zustandsgrößen folgt,
- wobei das System ferner dafür eingerichtet und ausgestaltet ist, dass in die Datenströme weiterleitenden Kommunikationsgeräten entsprechend den Dienstgüteanforderungen bei ausreichender Verfügbarkeit Ressourcen für die Übermittlung der Datenströme reserviert werden, wobei die Ressourcen nutzbare Übertragungszeitfenster, Bandbreite, zugesicherte maximale Latenz, Queue-Anzahl, Queue-Cache und/oder Adress-Cache in Switches oder Bridges umfassen.

## Claims

1. Method for providing time-critical control applications, in which
- the control applications are provided by means of sequence control components (113, 123, 133), which can in each case be loaded into a sequence control environment (112, 122, 132) formed by means of a server facility (101-103) and executed there,
- the control applications in each case determine periodic actuating variables (11) for a process to be controlled or regulated from periodically captured measured and/or state variables (12),
- a number of sequence control components (113, 123, 133) which are redundant to one another are executed parallel to one another, in each case subscribe uniformly to data streams with the periodically captured measured and/or state variables (12) and transmit the determined actuating variables by means of data streams to actuators and/or control units,
- service quality requirements are specified for a transmission of the data streams,
- the measured and/or state variables are sent to the sequence control components which are redundant to one another by including a sequence number assigned to one respective capture point in time,
- the sequence control components (113, 123, 133) which are redundant to one another transmit the determined actuating variables (11) to the actuators (320) and/or control units (31-32) by including a sequence number assigned to the respective process cycle,
- the actuators (320) and/or control units (31-32) identify and filter duplicates of the transmitted actuating variables (11) on the basis of the sequence numbers,
- the same sequence numbers are used to send the measured and/or state variables for the respective capture point in time as to transmit the determined actuating variables for the respective process cycle, which follows on from the respective capture point in time of the measured and/or state variables,
- resources for the transmission of the data streams are reserved in communication devices forwarding the data streams according to the service quality requirements when there is sufficient availability, wherein the resources comprise usable transmission time windows, bandwidth, ensured maximum latency, queue number, queue cache and/or address cache in switches or bridges.

2. Method according to claim 1,
in which the data streams with the periodically captured measured and/or state variables (12) are made known by respective data sources and/or sensors (310) in each case by means of data stream announcements and sent to a multicast address which is assigned to the sequence control components subscribing to the respective data stream.

3. Method according to one of claims 1 or 2,
in which the communication devices (201-202) forwarding the data streams are connected to one another by way of a time-sensitive network, in particular according to IEEE802.3, IEEE 802.1Q, IEEE 802.1AB, IEEE 802.1AS, IEEE 802.1BA and/or IEEE 802.1CB.

4. Method according to claim 3,
in which a forwarding of the data streams by means of Frame Preemption is controlled in particular according to IEEE 802.1Q, Time-Aware Shaper, in particular according to IEEE 802.1Q, Credit-Based Shaper, in particular according to IEEE 802.1Q, Burst-Limiting Shaper, Peristaltic Shaper and/or Priority-Based Shaper.

5. Method according to one of claims 1 to 4,
in which the sequence control components are software containers, Java bytecode or application programs running on operating systems and in which the sequence control environment is a container runtime environment, a Java virtual machine or an operating system without real-time extensions.

6. Method according to one of claims 1 to 5,
in which the sequence control components which are redundant to one another transmit the actuating variables via disjunct paths to the actuators and/or control units.

7. Method according to one of claims 1 to 6,
in which the actuating variables are transmitted in each case to control units which are redundant to one another.

8. Method according to one of claims 1 to 7,
in which the sequence control components (113, 123, 133) which are redundant to one another signal the fault-free presence of the measured and/or state variables for the respective capture point in time to the remaining redundant sequence control components in each case by means of an acknowledgement message (10).

9. Method according to one of claims 1 to 8,
in which, with a late and/or faulty presence of the measured and/or state variables in the majority of the sequence control components which are redundant to one another, a fault is signalled and/or the actuating variables determined last are transmitted again.

10. Method according to claim 9,
in which the measured and/or state variables are present late if they are not received by the sequence control components within a permissible latency as from the respective capture point in time.

11. System for providing time-critical control applications having
- a number of server facilities (101-103),
- a number of sequence control environments (112, 122, 132) formed by means of the server facilities (101-103),
- a number of sequence control components (113, 123, 133) for providing the control applications, wherein the sequence control components can be loaded in each case into a sequence control environment (112, 122, 132) formed by means of a server facility (101-103) and executed there,
- wherein the control applications are designed and configured to determine periodically in each case actuating variables (11) for a process to be controlled or regulated from periodically captured measured and/or state variables (12),
- wherein the sequence control components are designed and configured to be executed parallel to one another as sequence control components which are redundant to one another, in each case to subscribe uniformly to data streams with the periodically captured measured and/or state variables (12) and transmit the determined actuating variables to actuators and/or control units by means of data streams,
- wherein the system is designed and configured so that service quality requirements are specified for a transmission of the data streams and the measured and/or state variables are sent to the sequence control components which are redundant to one another by including a sequence number assigned to a respective capture point in time,
- wherein the sequence control components are designed and configured to transmit the determined actuating variables to the actuators and/or control units by including a sequence number assigned to the respective process cycle,
- wherein the actuators (320) and/or control units (31-32) are designed and configured to identify and filter duplicates of the transmitted actuating variables (11) using the sequence numbers,
- wherein the system is further designed and configured such that the same sequence numbers are used to send the measured and/or state variables for the respective capture point in time as to transmit the determined actuating variables for the respective process cycle, which follows on from the respective capture point in time of the measured and/or state variables,
- wherein the system is further designed and configured such that resources for the transmission of the data streams are reserved in communication devices forwarding the data streams according to the service quality requirements when there is sufficient availability, wherein the resources comprise usable transmission time windows, bandwidth, ensured maximum latency, queue number, queue cache and/or address cache in switches or bridges.

## Revendications

1. Procédé pour disposer d'applications de commande critiques dans le temps, dans lequel
- on dispose des applications de commande au moyen de composants (113, 123, 133) de commande de déroulement, qui peuvent être chargés respectivement dans un environnement (112, 122, 132) de commande de déroulement formé au moyen d'un dispositif (101-103) serveur et y être réalisées,
- les applications de commande déterminent, à partir de grandeurs (12) de mesure et/ou d'état détectées périodiquement, respectivement des grandeurs (11) réglantes périodiquement pour une opération à commander ou à régler,
- plusieurs composants (113, 123, 133) de commande de déroulement redondants entre eux sont réalisés en parallèle entre eux, abonnant respectivement de manière unitaire des flux de données avec les grandeurs (12) de mesure et/ou d'état détectées périodiquement et transmettent les grandeurs réglantes déterminées au moyen de flux de données à des actionneurs et/ou à des unités de commande,
- pour une transmission des flux de données, on précise des exigences de qualité de service,
- on envoie, aux composants de commande de déroulement redondants entre eux, des grandeurs de mesure et/ou d'état avec incorporation d'un numéro de séquence affecté à un instant de détection respectif,
- les composants (113, 123, 133) de commande de déroulement redondants entre eux transmettent aux actionneurs (320) et/ou aux unités (31-32) de commande des grandeurs (11) réglantes déterminées avec incorporation d'un numéro de séquence affecté au cycle opératoire respectif,
- les actionneurs (320) et/ou les unités (31-32) de commande identifient et filtrent à l'aide des numéros de séquence des doubles des grandeurs (11) réglantes transmises,
- pour l'envoi des grandeurs de mesure et/ou d'état pour l'instant de détection respectif, on utilise les mêmes numéros de séquence que pour la transmission des grandeurs réglantes pour le cycle opératoire respectif, qui suit l'instant de détection respectif des grandeurs de mesure et/ou d'état,
- dans des appareils de communication acheminant les flux de données, on réserve, conformément aux exigences de qualité de service en ayant une disponibilité suffisante, des ressources pour la transmission des flux de données, dans lequel les ressources comprennent des fenêtres de temps de transmission pouvant être utilisées, des largeurs de bande, des latences maximum sécurisées, un nombre de queue, un cache-queue ou un cache d'adresse dans des switches ou des bridges.

2. Procédé suivant la revendication 1,
dans lequel on fait connaître, respectivement au moyen d'annonces de flux de donnée par des sources de données et/ou de capteurs (310) respectifs, les flux de données avec les grandeurs (12) de mesure et d'état détectées périodiquement et on les envoie à une adresse multicast, qui est affectée aux composants de commande de déroulement abonnant le flux de données respectif.

3. Procédé suivant l'une des revendications 1 ou 2,
dans lequel les appareils (201-202) de communication acheminant les flux de données sont connectés entre eux par un time-sensitive network, en particulier conformément à IEEE 802.3, IEEE 802.1Q, IEEE 802.1AB, IEEE 802.1AS, IEEE 802.1BA et/ou IEEE 802.1CB.

4. Procédé suivant la revendication 3,
dans lequel on commande un acheminement des flux de données au moyen de frame preemption, en particulier suivant IEEE 802.10, time-aware shaper, en particulier suivant IEEE 802.1Q, credit-base shaper, en particulier suivant IEEE 802.1Q, burst limiting shaper, peristaltic shaper et/ou priority-based shaper.

5. Procédé suivant l'une des revendications 1 à 4,
dans lequel les composants de commande de déroulement sont des conteneurs logiciel, des java bytecode ou des programmes d'applications se déroulant sur des systèmes de fonctionnement et dans lequel l'environnement de commande de déroulement est un environnement de temps de fonctionnement de conteneur, une machine java virtuelle ou un système de fonctionnement sans extension en temps réel.

6. Procédé suivant l'une des revendications 1 à 5,
dans lequel les composants de commande de déroulement redondants entre eux transmettent aux actionneurs et/ou aux unités de commande des grandeurs réglantes en passant par des chemins disjoints.

7. Procédé suivant l'une des revendications 1 à 6,
dans lequel on transmet les grandeurs réglantes respectivement à des unités de commande redondantes entre elles.

8. Procédé suivant l'une des revendications 1 à 7,
dans lequel les composants (113, 123, 133) de commande de déroulement redondants entre eux signalent aux autres composants de commande de déroulement redondants, respectivement au moyen d'un message (10) de confirmation, la présence sans erreur des grandeurs de mesure et/ou d'état à l'instant de détection respectif.

9. Procédé suivant l'une des revendications 1 à 8,
dans lequel en la présence retardée et/ou entachée d'erreur des grandeurs de mesure et/ou d'état, on signale une erreur dans la pluralité des composants de commande de déroulement redondants entres eux et/ou on effectue une transmission renouvelée des grandeurs réglantes déterminées en dernier.

10. Procédé suivant la revendication 9,
dans lequel les grandeurs de mesure et/ou d'état sont présentes de manière retardée, si elles ne sont pas reçues par les composants de commande de déroulement dans une latence admissible à partir de l'instant de détection respectif.

11. Système pour disposer d'applications de commande critiques du point de vue du temps comprenant
- plusieurs dispositifs (101-103) serveurs,
- plusieurs environnements (112, 122, 132) de commande de déroulement formés au moyen des dispositifs (101-103) serveurs,
- plusieurs composants (113, 123, 133) de commande de déroulement pour disposer des applications de commande, dans lequel les composants de commande de déroulement peuvent être chargés respectivement dans un environnement (112, 122, 132) de commande de déroulement formé au moyen d'un dispositif (101-103) serveur et y être réalisés,
- dans lequel les applications de commande sont agencées et conformées pour déterminer, à partir de grandeurs (12) de mesure et/ou d'état détectées périodiquement, respectivement des grandeurs (11) réglantes de manière périodique pour une opération à commander ou à régler,
- dans lequel les composants de commande de déroulement sont agencés et conformés pour être exécutés en parallèle entre eux, comme composants de commande de déroulement redondants entre eux, pour abonner respectivement de manière unitaire des flux de données avec les grandeurs (12) de mesure et/ou d'état détectées périodiquement et transmettre les grandeurs réglantes déterminées au moyen de flux de données aux actionneurs et/ou aux dispositifs de commande,
- dans lequel le système est agencé et conformé de manière à préciser des exigences de qualité de service pour une transmission des flux de données et pour envoyer aux composants de commande de déroulement redondants entre eux les grandeurs de mesure et/ou d'état avec incorporation d'un numéro de séquence affecté à l'instant de détection respectif,
- dans lequel les composants de commande de déroulement sont agencés et conformés pour transmettre aux actionneurs et/ou aux dispositifs de commande des grandeurs réglantes déterminées avec incorporation d'un numéro de séquence affecté au cycle opératoire respectif,
- dans lequel les actionneurs (320) et/ou les unités (31-32) de commande sont agencés et conformés pour, à l'aide des numéros de séquence, identifier et filtrer des doubles des grandeurs (11) réglantes transmises,
- dans lequel le système est en outre agencé et conformé pour que soient utilisés, pour l'envoi les grandeurs de mesure et/ou d'état à l'instant de détection respectif, les mêmes numéros de séquence que pour la transmission des grandeurs réglantes déterminées pour le cycle opératoire respectif, qui suit l'instant de détection respectif des grandeurs de mesure et/ou d'état,
- dans lequel le système est agencé et conformé en outre de manière à ce que soient réservées, dans des appareils de communication acheminant les flux de données conformément aux exigences de qualité de service avec une disponibilité suffisante, des ressources pour la transmission des flux de données, dans lequel les ressources comprennent des fenêtres de temps de transmission pouvant être utilisées, des largeurs de bande, des latences maximum sécurisées, un nombre de queue, un cache-queue ou un cache d'adresse dans des switches ou des bridges.
